# DEMANDE DE BREVET EUROPEEN

(11) **EP 4 561 090 A1**
(43) Date de publication de la demande: **28.05.2025**
(21) Numéro de dépôt: 24209220.3
(22) Date de dépôt: 28.10.2024
(51) Int. Cl.: H04N 23/90, G03B 17/56, G08G 1/017

(54) **KIT D'INSTALLATION D'UN DISPOSITIF D'ACQUISITION D'IMAGES POUR AUTOMATES DE CONTRÔLE ROUTIER**

(30) Priorité: 24.11.2023 FR 2313002
(71) Demandeur: IDEMIA Road Safety France, 92400 Courbevoie (FR)
(72) Inventeur: GUIDON, Eric, 92400 Courbevoie (FR); ARROYO, Jean-Jacques, 92400 Courbevoie (FR); CARRION, Grégoire, 92400 Courbevoie (FR); ALLIOT, Samuel, 92400 Courbevoie (FR)
(74) Mandataire: IPS

(57) **Abrégé**

Kit d'installation d'un système d'acquisition d'images pour un automate de contrôle routier comprenant :
- une pluralité de dispositifs optiques (3000) avec des distances focales différentes, chaque dispositif optique comprenant un objectif optique (3002) et un capteur photosensible (3001) ;
- un platine de fixation (1000) adaptée à former une liaison mécanique entre plusieurs dispositifs optiques de ladite pluralité de dispositifs optiques (3000) ;
dans lequel
- la platine de fixation (1000) comprend une caméra fixe de contexte (1001) et
une pluralité de positions de fixation sélectionnables (1002) pour chaque dispositif optique de la pluralité de dispositifs optiques (3000) ;
- lesdites positions de fixation sélectionnables (1002) sont arrangées de manière à former une pluralité d'alignements préétablis entre la caméra fixe de contexte (1001) et un ou plusieurs dispositifs optiques sélectionnés parmi la pluralité de dispositifs optiques (3000) ;
- lesdits alignements préétablis et lesdites positions sélectionnables (1002) sont configurés selon un abaque de correspondance ;
- ledit abaque de correspondance fournit une pluralité d'alignements préétablis selon le nombre et la largeur des voies routières à surveiller par l'automate, de la position et de la distance à la ligne d'infraction dudit système d'acquisition, et du nombre et de la distance focale des objectifs optiques nécessaires à la couverture desdites voies routières.

## Description

### Domaine technique

La présente invention concerne un kit d'installation d'un dispositif d'acquisition d'images pour automate de contrôle routier. Elle a également pour objet une méthode d'installation d'un dispositif d'acquisition d'images pour automate de contrôle routier à l'aide d'un tel kit.

### Arrière-plan technique

Il est une pratique courante de contrôler ou de surveiller le trafic routier à l'aide d'automates comprenant des cinémomètres - dispositifs radars ou lasers pour la mesure de vitesse et de position des véhicules -, et des systèmes optiques configurés pour l'acquisition d'images de l'intérieur et/ou de l'extérieur des véhicules. Ces automates sont programmés pour détecter et caractériser certaines infractions routières commises par les conducteurs des véhicules grâce à l'analyse combinée des signaux des cinémomètres et des images acquises. Ils permettent notamment de produire les éléments de typage et de preuve de l'infraction et d'extraire à partir des images les informations d'identification telles que les numéros d'immatriculation des véhicules pour dressage du procès-verbal.

La fiabilité de ces automates repose en partie sur l'exactitude et la robustesse des arrangements et des alignements des cinémomètres et des systèmes optiques les uns avec les autres afin d'assurer, pour chaque véhicule contrôlé, une parfaite concordance entre les données des cinémomètres et les images acquises par ces systèmes. Cette concordance est essentielle pour lever toute ambigüité quant à ce qu'un véhicule identifié en infraction par les cinémomètres corresponde exactement au véhicule dont une image est acquise par les dispositifs optiques pour son identification.

Outre ce couplage optique entre cinémomètres et dispositifs optiques, les systèmes optiques doivent également être orientés selon des directions spécifiques en fonction des contraintes topographiques de l'environnement routier dans lequel l'automate de contrôle est installé ainsi que du nombre et de la largeur des voies à contrôler. Il est une pratique courante de procéder manuellement, en usine, aux réglages des positions et orientations des dispositifs optiques. Ces réglages, qui peuvent être, dans certains cas, complétés par des réglages sur site d'installation, se fondent sur les capacités d'un opérateur humain à analyser un certain nombre d'images acquises par les systèmes optiques lors du passage de véhicules et à établir une configuration optimale pour l'ensemble des éléments optiques afin d'assurer à la fois une couverture maximale des voies et la meilleure concordance entre les données des cinémomètres et les images acquises. Il existe également des automates permettant de faciliter l'installation et de réduire les erreurs d'origine humaine.

EP 2 690 459 A2, JENOPTIK ROBOT GMBH [DE], 29.01.2014 décrit un automate de contrôle routier comprenant un cinémomètre radar ou laser et deux caméras dont une caméra haute résolution. Le cinémomètre et les deux caméras sont arrangés de manière que leurs champs optiques respectifs se recouvrent. L'automate comprend une unité de traitement de données configurée pour identifier des objets dans les images acquises par les deux caméras et comparer leurs positions avec celles mesurées par le cinémomètre.

EP 3 012 652 A1, MORPHO [FR], 27.04.2016 décrit une unité de contrôle routier comprenant un cinémomètre et des dispositifs optiques assemblés mécaniquement entre eux à l'aide d'une platine. La platine comprend un assemblage d'une pièce principale et deux pièces secondaires, les deux pièces secondaires sont chacune adaptées au support d'un dispositif optique. Les trois pièces comprennent des fixations amovibles configurées pour orienter les dispositifs optiques dans une orientation angulaire constante prédéterminée par rapport à un axe radioélectrique du cinémomètre. Des marges d'ajustement de l'orientation sont prévues pour prendre en compte des variations possibles dans les largeurs des voies de circulation de la route, la vitesse moyenne des véhicules sur la route, ou encore la topographie du lieu d'installation de l'unité de contrôle routier. L'orientation et ses marges d'ajustement sont déterminées par la platine elle-même pour chaque dispositif optique. Cette unité simplifie son installation et améliore la justesse de son réglage pour assurer la concordance entre le véhicule contrôlé par le cinémomètre et celui figurant sur les images acquises par les dispositifs optiques.

WO 2022/223921 A1, IDEMIA IDENTITY & SECURITY FRANCE [FR], 27.10.2022 décrit un dispositif d'acquisition d'images comprenant une platine monobloc et trois dispositifs optiques dont les axes optiques sont coplanaires. Les axes optiques des trois dispositifs optiques sont orientés de manière que leurs angles de champs se recouvrent partiellement et les vecteurs optiques supports de leurs axes optiques satisfont à des relations vectorielles particulières. La platine peut comprendre en outre un quatrième dispositif optique dont l'axe optique est sécant avec les axes optiques de deux des autres dispositifs optiques en un point donné de l'espace. Ce dispositif permet l'acquisition d'une image grand angle de basse résolution dans laquelle est rapporté un assemblage d'image à champ faible de haute résolution. Le dispositif est plus économe en ce qu'il dispense de l'utilisation d'un dispositif optique à grand angle de haute résolution.

### Résumé de l'invention

### Problème technique

Un inconvénient de l'unité de contrôle décrite dans EP 3 012 652 A1, MORPHO [FR], 27.04.2016 est le manque de modularité, de personnalisation et d'adaptabilité. La platine de fixation de l'unité de contrôle est dédiée à un intervalle donné de valeurs de distances d'installation et, selon cet intervalle, à des dispositifs optiques avec distances focales données. Ainsi, il est nécessaire, pour un opérateur, d'avoir à disposition un jeu de platines interchangeables sur chacune desquelles est inscrit l'intervalle de valeurs de distances d'installation et les distances focales dédiées. En cas de modifications de la topographie de la zone contrôlée et/ou des caractéristiques de la route au bord de laquelle l'unité est installée, telles que le nombre et/ou la largeur des voies, un changement d'orientation, ou encore la construction de talus antibruit périphériques, l'opérateur peut être dans l'obligation de substituer complètement la platine existante par une nouvelle autre avec l'ensemble de ses objectifs, et de procéder à de nouveaux réglages. Non seulement une telle substitution constitue une perte de temps mais également une perte matérielle si l'ancienne platine ne peut faire l'objet d'une réutilisation.

Un autre inconvénient de l'unité de contrôle est qu'il est nécessaire de manufacturer une pluralité de platines de fixation différentes pour chaque intervalle de valeurs de distances d'installation et chaque jeu dédié d'objectifs optiques. Une telle multiplication des caractéristiques distinctives entre les platines implique le recours à des lignes de production spécifiques à chaque platine, et donc un surcoût de production. En outre, il y a un risque qu'un certain nombre de platines dédiées à certains intervalles de valeurs de distances d'installation et à certains objectifs optiques soient produites inutilement si elles ne font l'objet d'aucune utilisation par manque d'opportunités. Il en résulte une perte matérielle et financière.

### Solution technique

Selon un premier aspect de l'invention, il est fourni un kit d'installation d'un système d'acquisition d'images pour automates de contrôle routier tel que décrit dans la revendication 1, les revendications dépendantes étant des modes avantageux de réalisation.

Selon un deuxième aspect de l'invention, il est fourni une méthode d'installation d'un système d'acquisition d'images pour automates de contrôle routier à l'aide d'un kit selon le premier aspect de l'invention.

### Brève description des dessins

Fig. 1 est une représentation schématique en perspective d'une platine pour un kit d'installation selon le premier aspect de l'invention.
Fig. 2 est une représentation schématique en vue face de la platine de la Fig. 1.
Fig. 3 est une représentation schématique en perspective d'un dispositif optique.
Fig. 4 est une représentation schématique d'une platine de fixation sur laquelle sont fixés deux dispositifs selon un premier alignement préétabli.
Fig. 5 est une représentation schématique d'une platine de fixation sur laquelle sont fixés deux dispositifs selon un deuxième alignement préétabli.

### Description détaillée des modes de réalisation

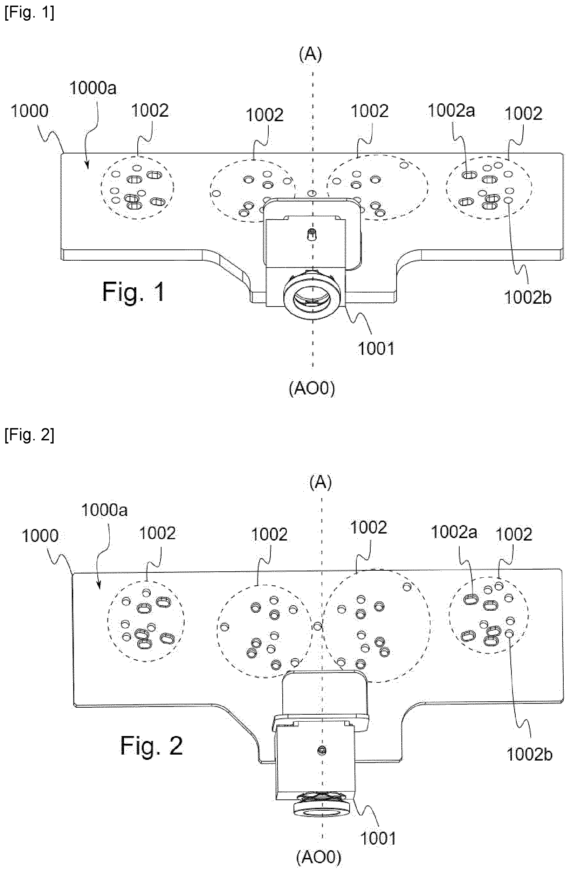

Dans un premier aspect de l'invention, en référence aux Fig. 1 à 3, il est fourni un kit d'installation d'un système d'acquisition d'images pour un automate de contrôle routier comprenant :
- une pluralité de dispositifs optiques 3000 avec des distances focales différentes, chaque dispositif optique comprenant un objectif optique 3002 et un capteur photosensible 3001 ;
- un platine de fixation 1000 adaptée à former une liaison mécanique entre plusieurs dispositifs optiques de ladite pluralité de dispositifs optiques 3000 ; dans lequel
- la platine de fixation 1000 comprend une caméra fixe de contexte 1001 et une pluralité de positions de fixation sélectionnables 1002 pour chaque dispositif optique de la pluralité de dispositifs optiques 3000 ;
- lesdites positions de fixation sélectionnables 1002 sont arrangées de manière à former une pluralité d'alignements préétablis entre la caméra fixe de contexte 1001 et un ou plusieurs dispositifs optiques sélectionnés parmi la pluralité de dispositifs optiques 3000 ;
- lesdits alignements préétablis et lesdites positions sélectionnables 1002 sont configurés selon un abaque de correspondance ;
- ledit abaque de correspondance fournit une pluralité d'alignements préétablis selon le nombre et la largeur des voies routières à surveiller par l'automate, de la position et de la distance à la ligne d'infraction dudit système d'acquisition, et du nombre et de la distance focale des objectifs optiques nécessaires à la couverture desdites voies routières.

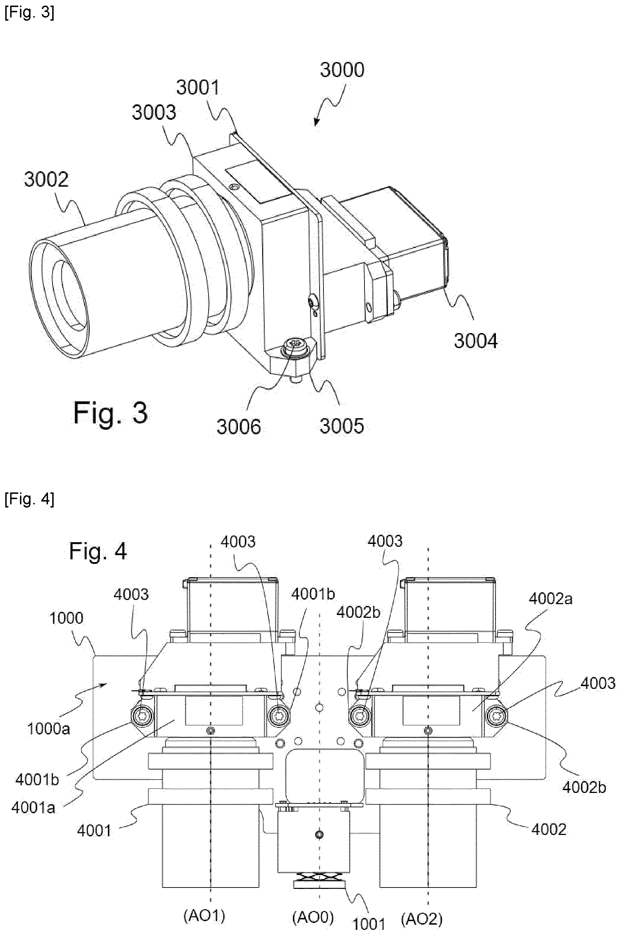

Dans le cadre de la présente invention, en référence à la Fig. 3, il est entendu par « dispositif optique » un dispositif 3000 apte à acquérir des images, photographies ou vidéos de voies routières à des distances focales et des grossissements donnés. Un tel dispositif comprend généralement un objectif optique 3002 et un capteur photosensible 3001. Sur la Fig. 3, le capteur photosensible 3001 est supporté par une carte électronique disposé à l'intérieur d'un châssis 3003. Le dispositif optique 3000 peut en outre comprendre un connecteur électronique 3004, tel qu'un connecteur à broches, pour son alimentation électrique et la transmission des images acquises vers un dispositif de traitement de données tel qu'un ordinateur.

Il est entendu par « capteur photosensible » 3001 un composant électronique photosensible capable de convertir un rayonnement électromagnétique, en particulier un rayonnement électromagnétique ultra-violet, visible ou infrarouge, en un signal électrique, puis de le traiter pour en former une image. Un tel composant électronique est généralement dépourvu de tout élément optique, tel qu'une lentille, susceptible de former un système optique dont la fonction principale est de modifier la trajectoire du rayonnement électromagnétique avant sa capture par la surface active dudit composant. Eventuellement, dans le cas d'un capteur photosensible numérique, la surface active du capteur photosensible peut être dotée de microlentilles ayant pour fonction de concentrer le rayonnement électromagnétique sur chaque pixel de la surface active. Ces microlentilles font partie de la surface active du capteur et ne sont pas des éléments rapportés.

Il est entendu par « objectif optique » 3002 un système optique dont la fonction principale est de modifier la trajectoire du rayonnement électromagnétique. En particulier, il est entendu par objectif optique un dispositif optique formé d'une succession de dioptres sphériques, asphériques ou plan, tels que des lentilles optiques, et capable de former l'image d'un objet situé à certaines profondeurs de champ. Un objectif photographique est un exemple d'objectif optique qui peut être utilisé dans le cadre de l'invention.

Il est entendu par « platine de fixation » 1000 tout support apte à supporter des dispositifs optiques 3000 et assurer une liaison mécanique solidaire entre eux. Ce support est généralement un support plan muni d'au moins une partie principale sur laquelle la caméra contexte et le ou les dispositifs optiques peuvent être fixés. Le support est de préférence en métal ou alliage métallique. Il peut être en acier ou en alliage d'aluminium.

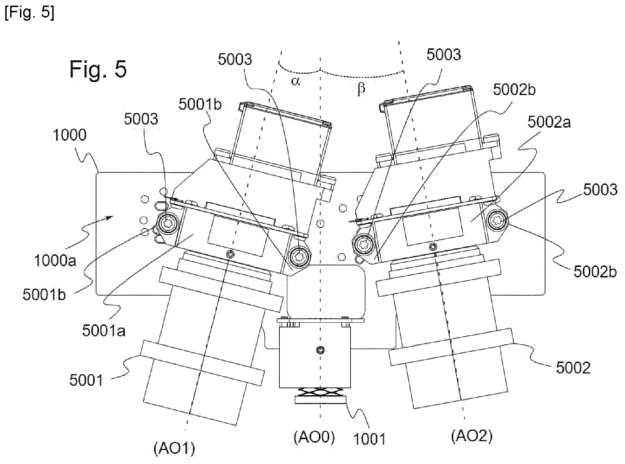

Conformément à l'invention, les positions de fixation sélectionnables sont arrangées de manière à former une pluralité d'alignements préétablis entre la caméra fixe de contexte 1001 et un ou plusieurs dispositifs optiques sélectionnés parmi la pluralité de dispositifs optiques 3000. Autrement dit, en référence aux Fig. 4 & 5, chacune des positions de fixation sélectionnables 1002, lorsqu'un ou plusieurs dispositifs optiques 4001, 4002, 5001, 5002 y sont montés, oriente l'axe optique (AO1), (AO2) desdits dispositifs optiques 4001, 4002, 5001, 5002 selon une direction donnée préétablie par rapport à l'axe optique (AO0) de la caméra de contexte 1001. La caméra de contexte 1001, plus précisément son axe optique (AO0), sert ainsi d'axe de référence pour chaque alignement de la pluralité d'alignements.

Selon un premier exemple d'alignement, en référence à la Fig. 4, les deux dispositifs optiques 4001, 4002 sont fixés sur des positions de fixations sélectionnables 1002 dont les alignements préétablis orientent leur axe optiques (AO1), (AO2) selon une direction parallèle à l'axe optique (AO0) de la caméra de contexte 1001. Selon un deuxième exemple d'alignement, en référence à la Fig. 5, les deux dispositifs optiques 5001, 5002 sont fixés sur des positions de fixations sélectionnables 1002 dont les alignements préétablis orientent leur axe optiques (AO1), (AO2) respectivement selon deux directions angles différents α, β par rapport l'axe optique (AO0) de la caméra de contexte 1001.

Les alignements sont généralement préétablis dès la conception et la fabrication de la platine et des dispositifs optiques. Ainsi, les alignements peuvent être adaptés aux topographies courantes des zones de contrôles susceptibles d'être contrôlée par l'automate de contrôle routier dans lequel le kit selon le premier aspect de l'invention est implémenté. Les alignements sont préétablis pour pouvoir couvrir tout type des zones de contrôle dans des sections de route courbes, rectilignes et/ou inclinées, tels que des virages, les droites, les montées et les descentes. Les alignements peuvent aussi être adaptés à des topographies de zones particulières de contrôle, notamment selon les particularismes géographiques des lieux où se situent ces zones.

Les positions de fixation sélectionnables 1002 et les alignements préétablis qu'elle établissent sont configurés selon un abaque de correspondance qui fournit une pluralité d'alignements selon la largeur des voies routières à surveiller par l'automate, de la position et de la distance à la ligne d'infraction dudit dispositif d'acquisition, et du nombre et de la distance focale des objectifs optiques nécessaires à la couverture desdites voies routières. De préférence, l'abaque de correspondance couvre de 2 à 8 voies routières. Un exemple d'abaque est fourni dans le tableau 1.

**[Tab. 1]**

| Tab 1 | Nombre de dispositifs optiques | 1 | 1 | 1 | 1 | 2 | 2 | 2 |
|---|---|---|---|---|---|---|---|---|
| | Focale (mm) | 16 | 25 | 35 | 50 | 25 | 35 | 50 |
| 2 voies | Distance min (m) | 10 | 14 | 20 | 28 | 10 | 12 | 16 |
| | Distance Max (m) | 20 | 30 | 44 | 60 | 28 | 40 | 56 |
| 3 voies | Distance min (m) | 14 | 20 | 28 | 40 | 12 | 16 | 24 |
| | Distance Max (m) | 20 | 30 | 42 | 60 | 26 | 36 | 46 |
| 4 voies | Distance min (m) | 18 | 26 | 30 | 52 | 15 | 19 | 27 |
| | Distance Max (m) | 20 | 30 | 44 | 60 | 26 | 39 | 56 |
| 5 voies | Distance min (m) | NON | NON | NON | NON | 18 | 24 | 32 |
| | Distance Max (m) | | | | | 26 | 38 | 52 |
| 6 voies | Distance min (m) | NON | NON | NON | NON | 20 | 28 | 40 |
| | Distance Max (m) | | | | | 26 | 38 | 52 |
| 7 voies | Distance min (m) | NON | NON | NON | NON | 22 | 32 | 44 |
| | Distance Max (m) | | | | | 26 | 38 | 52 |
| 8 voies | Distance min (m) | NON | NON | NON | NON | 26 | 36 | 50 |
| | Distance Max (m) | | | | | 26 | 38 | 56 |

Selon un premier exemple, à partir de l'abaque du tableau 1, pour un automate de contrôle situé entre 10 et 20 mètres d'une zone de contrôle comprenant deux voies, un seul dispositif optique d'une distance focale de 16 mm peut être sélectionné parmi la pluralité de dispositifs du kit selon le premier aspect de l'invention. Le dispositif optique peut ensuite être fixé sur la platine de fixation sur les positions de fixation sélectionnables prévues pour ledit dispositif optique.

Selon un deuxième exemple, à partir de l'abaque du tableau 1, pour un automate de contrôle situé de 40 à 52 mètres d'une zone de contrôle comprenant six voies, deux dispositifs optiques d'une distance focale de 50 mm peuvent être sélectionnés parmi la pluralité de dispositifs du kit selon le premier aspect de l'invention. Les deux dispositifs optiques peuvent ensuite être fixé sur la platine de fixation sur les positions de fixation sélectionnables prévues pour lesdits dispositifs optiques.

L'abaque est de toute forme adaptée. Il peut être implémenté sur un support physique, tel qu'un manuel ou diagramme papier, qui accompagne le kit selon le premier aspect de l'invention. Il peut aussi être implémenté sur un support dématérialisé tel qu'une tablette sur laquelle il est préalablement chargé ou peut être téléchargé via la lecture d'un symbole formant code, tel qu'un code à barres 2D (« data matrix »), apposé sur la platine. Avantageusement, l'abaque de correspondance peut faire partie d'une suite logiciel de réalité augmentée ayant pour fonction de superposer virtuellement une image des dispositifs optiques sur les positions sélectionnables adéquates de la platine selon le nombre et la largeur des voies routières à surveiller par l'automate, de la position et de la distance à la ligne d'infraction dudit dispositif d'acquisition, et du nombre et de la distance focale des objectifs optiques nécessaires à la couverture desdites voies routières. Une telle fonction peut avantageusement aider un opérateur à la mise en oeuvre d'un kit selon le premier aspect de l'invention.

La caméra de contexte 1001 a pour fonction de fournir une visualisation large, ou encore un panorama, d'une zone susceptible d'être contrôlée par un automate de contrôle dans lequel un kit selon le premier aspect de l'invention est utilisé. Aussi, selon un mode préféré de réalisation, la caméra de contexte 1001 est une caméra grand angle, de préférence à haute résolution. Elle peut comprendre un objectif à courte focale avec un angle de champ d'au moins 50°, de préférence d'au moins 70°, voire d'au moins 90°. La caméra de contexte est de préférence une caméra haute résolution permettant notamment l'acquisition d'images d'une définition d'au moins 720p, voire 1080p.

La caméra de contexte 1001 est mécaniquement solidaire de la platine de fixation 1001. Elle peut y être fixée à l'aide de tout moyen de fixation adapté, de préférence amovible, tel qu'un ensemble vis / écrou. En référence aux Fig. 1 à 5, elle peut être disposée sur toute partie adaptée de la platine de fixation 1001, notamment sur une partie où les dispositifs optiques 4001, 4002, 5001, 5002, susceptibles d'être fixés sur ladite platine, n'obstrue pas son champ de vision. Elle peut être fixée sur la même face 1000a que celle sur laquelle un ou plusieurs dispositifs optiques 4001, 4002, 5001, 5002 sont susceptibles d'être fixés, ou sur une face opposée.

Selon un mode préféré de réalisation, en référence à la Fig. 1, l'axe optique (AO0) de la caméra de contexte 1001 coïncide avec un axe de symétrie (A) de la platine de fixation 1001. A titre d'exemple, l'axe optique (AO0) de la caméra 1001 peut coïncider avec l'axe de symétrie (A) de la face 1000a de la platine servant de support à la caméra de contexte 1001 et aux dispositifs optiques. Cette disposition est avantageuse en ce qu'elle facilite la définition des positions sélectionnables formant des alignements préétablis lors de la conception et la fabrication de la platine de fixation, et permet d'utiliser indifféremment le kit des deux côtés d'une voie routière.

Le kit selon le premier aspect de l'invention peut comprendre tout type de dispositif optique 3000 adapté au contrôle de voies routières, notamment pour la production d'éléments de typage et de preuve d'infractions routière et l'extraction à partir des images acquises d'informations d'identification telles que les numéros d'immatriculation des véhicules. Selon certains modes de réalisation, la pluralité des dispositifs optiques 3000 comprend des objectifs optiques 3002 à focales courtes dont la distance focale varie entre 10mm et 100mm, de préférence entre 15mm et 50mm.

La taille de la platine de fixation 1000 et le nombre de ses positions sélectionnables dépendent du nombre de dispositifs optiques 3000 qu'elle est susceptible de supporter et pour lequel il n'y a pas de limite. Néanmoins, selon des modes préférés de réalisation, la platine de fixation est arrangée pour recevoir au moins un dispositif optique, de préférence au moins deux dispositifs optiques, voire au moins trois dispositifs optiques.

Le nombre de dispositifs optiques que le kit selon le premier aspect de l'invention peut comprendre, relève du nombre de configurations différentes que l'abaque de correspondance est susceptible de couvrir quant aux caractéristiques des zones susceptibles d'être contrôlées. Le kit peut comprendre quatre paires de dispositifs optiques, chaque paire correspondant à une distance focale différente.

Les positions de fixation sélectionnables 1002 sont de tout type adapté pour la fixation des dispositifs optiques. En référence aux Fig. 1 & 2, elles peuvent par exemple sous la forme d'orifices dans lesquelles les dispositifs optiques peuvent être fixés, par exemple par clipsage ou par un ensemble de vis / écrou. Dans un mode préféré de réalisation, en référence aux Fig. 4 & 5, la platine de fixation 1000 est munie de fixations amovibles 4003, 5003 adaptées à la fixation des dispositifs de la pluralité des dispositifs optiques 4001, 4002, 5001, 5002. Les fixations amovibles peuvent être par exemple des ensembles de vis / écrou destinés à être introduits dans les orifices 1002a, 1002b correspondant aux positions sélectionnables 1002.

En référence aux Fig. 3, 4 & 5, les dispositifs optiques 3000 peuvent avantageusement comprendre un châssis de fixation 3003, 4001a, 5001a adapté pour faciliter sa fixation sur la platine de fixation 1000. A titre d'exemple, le châssis 3003, 4001a, 4002a, 5001a, 5002a peut être muni de deux pattes de fixation 3005, 4001b, 4002b, 5001b, 5002b situées de part et d'autre des dispositifs 3000, 4001, 4002, 5001, 5003. Lorsque les positions de fixation sélectionnables 1002 sont sous la forme d'orifice 1002a, 1002b, chaque patte de fixation 3005, 4001b, 4002b, 5001b, 5002b peut comprendre un orifice arrangé de manière qu'il corresponde à un orifice correspondant à une position de fixation sélectionnable. Chaque patte de fixation 3005, 4001b, 4002b, 5001b, 5002b peut ensuite être fixé sur la platine de fixation 1000 à l'aide d'un moyen de fixation amovible tel qu'un ensemble vis / écrou 3006, 4003, 5003.

Selon des modes avantageux de réalisation, le châssis de fixation 3003, 4001a, 4002a, 5001a, 5002a de chaque dispositif optique 3000, 4001, 4002, 5001, 5002 est arrangé de manière qu'il ne puisse être fixé que sur un nombre limité de positions de fixation sélectionnables, par exemple une, deux ou trois positions. Un tel arrangement procure une fonction de détrompeur. Le risque d'erreur susceptible d'être commise par un opérateur lorsqu'il procède à la mise en place de dispositifs optiques sur la platine conformément à l'invention peut ainsi être significativement réduit. Par exemple, après avoir sélectionner un ou deux dispositifs à l'aide de l'abaque, l'opérateur ne peut commettre l'erreur d'installer, par inadvertance, les dispositifs optiques sur de mauvaises positions de fixation.

Selon un mode de réalisation, les positions de fixation sélectionnables 1002 sont arrangées de manière que les alignements préétablis présentent une marge d'ajustement, de préférence une marge d'ajustement inférieure à 5°, voire à 2°, voire 1° de part et d'autre d'une orientation nominale desdits alignements préétablis. A titre d'exemple de réalisation, en référence aux Fig. 1 & 2, certains orifices 1002a correspondant à chaque position de fixation sélectionnable 1002 peuvent être de forme oblongue et fournir une marge d'ajustement par coopération avec un orifice circulaire 1002b ayant une fonction de pivot. Lorsqu'un dispositif optique 3000 est fixé sur la platine de fixation à l'aide, par exemple, de deux ensembles vis / écrou correspondant à deux orifices d'une position de fixation sélectionnable, l'ensemble vis / écrou monté dans l'orifice circulaire 1002b reste fixe pour former un pivot tandis que l'ensemble vis / écrou monté dans l'orifice oblong 1002a peut se déplacer le long dudit orifice pour permettre le déplacement du dispositif optique dans un plan sensiblement parallèle à celui de la platine. Le centre de l'orifice correspond à l'orientation nominale de l'alignement préétabli et sa longueur constitue une marge d'ajustement inférieure à 5°, voire à 2°, voire 1 ° de part et d'autre de cette orientation nominale. Une fois l'orientation choisie, l'ensemble vis / écrou monté dans l'orifice oblong 1002a est resserré pour bloquer le dispositif optique 3000 selon cette orientation.

Selon un deuxième aspect de l'invention, il est fourni une méthode d'installation d'un dispositif d'acquisition d'images pour automates de contrôle routier. La méthode permet d'utiliser et mettre en oeuvre un kit d'installation conformément au premier aspect de l'invention. La méthode comprend les étapes suivantes :
- fournir un kit d'installation d'un dispositif d'acquisition d'images selon l'un des quelconques modes de réalisation du premier aspect de l'invention ;
- assembler la platine de fixation 1000 dans l'espace de l'automate prévu à cet effet ;
- mesurer la position et la distance de la platine de fixation 1000 à ligne d'infraction à l'aide de caméra de contexte 1001 ;
- sélectionner un ou plusieurs dispositifs optiques de même ou de différentes distances focales parmi la pluralité de dispositifs 3000 du kit selon l'abaque de correspondance du kit en fonction du nombre et de la largeur des voies routières à surveiller par l'automate, la position et la distance à ligne d'infraction dudit dispositif d'acquisition ;
- arranger le ou les objectifs optiques sélectionnés sur les positions sélectionnables 1002 de la platine de fixation 1000 selon l'abaque de correspondance.

### Références

### Littérature brevet

EP 2 690 459 A2, JENOPTIK ROBOT GMBH [DE], 29.01.2014.

EP 3 012 652 A1, MORPHO [FR], 27.04.2016.

WO 2022/223921 A1, IDEMIA IDENTITY & SECURITY FRANCE [FR], 27.10.2022.

## Revendications

1. Kit d'installation d'un système d'acquisition d'images pour un
automate de contrôle routier comprenant :
- une pluralité de dispositifs optiques (3000) avec des distances focales différentes, chaque dispositif optique comprenant un objectif optique (3002) et un capteur photosensible (3001) ;
- un platine de fixation (1000) adaptée à former une liaison mécanique entre plusieurs dispositifs optiques de ladite pluralité de dispositifs optiques (3000) ;
dans lequel
- la platine de fixation (1000) comprend une caméra fixe de contexte (1001) et une pluralité de positions de fixation sélectionnables (1002) pour chaque dispositif optique de la pluralité de dispositifs optiques (3000) ;
- lesdites positions de fixation sélectionnables (1002) sont arrangées de manière à former une pluralité d'alignements préétablis entre la caméra fixe de contexte (1001) et un ou plusieurs dispositifs optiques sélectionnés parmi la pluralité de dispositifs optiques (3000) ;
- lesdits alignements préétablis et lesdites positions sélectionnables (1002) sont configurés selon un abaque de correspondance ;
- ledit abaque de correspondance fournit une pluralité d'alignements préétablis selon le nombre et la largeur des voies routières à surveiller par l'automate, de la position et de la distance à la ligne d'infraction dudit système d'acquisition, et du nombre et de la distance focale des objectifs optiques nécessaires à la couverture desdites voies routières.

2. Kit selon la revendication 1, tel que la caméra de contexte (1001) est une caméra grand angle, de préférence à haute résolution.

3. Kit selon l'une quelconque des revendications 1 à 2, tel que l'axe optique (AO0) de caméra de contexte (1001) coïncide avec un axe de symétrie (A) de la platine de fixation 1001.

4. Kit selon l'une quelconque des revendications 1 à 3, tel que la pluralité des dispositifs optiques (3000) comprend des objectifs optiques dont la distance focale varie entre 10mm et 100mm, de préférence entre 15mm et 50mm.

5. Kit selon l'une quelconque des revendications 1 à 4, tel que la platine de fixation (1000) est munie de fixations amovibles (4003, 5003) adaptées à la fixation des dispositifs de la pluralité des dispositifs optiques (4001, 4002, 5001, 5002).

6. Kit selon l'une quelconque des revendications 1 à 5, tel que l'abaque de correspondance couvre de 2 à 8 voies routières.

7. Kit selon l'une quelconque des revendications 1 à 6, tel que la platine de fixation (1000) est arrangée pour recevoir au moins un dispositif optique, de préférence au moins deux dispositifs optiques, voire au moins trois dispositifs optiques.

8. Kit selon l'une quelconque des revendications 1 à 7, tel que les positions de fixation sélectionnables (1002) sont arrangées de manière que les alignements préétablis présentent une marge d'ajustement, de préférence une marge d'ajustement inférieure à 5°, voire à 2°, voire 1° de part et d'autre à l'orientation nominale desdits alignements préétablis.

9. Méthode d'installation d'un dispositif d'acquisition d'images pour automates de contrôle routier, ladite méthode comprenant les étapes suivantes :
- fournir un kit d'installation d'un dispositif d'acquisition d'images selon l'une quelconque des revendications 1 à 8 ;
- assembler la platine dans l'espace de l'automate prévu à cet effet ;
- mesurer la position et la distance de la platine à ligne d'infraction à l'aide de caméra de contexte ;
- sélectionner un ou plusieurs dispositifs optiques de même ou de différentes distances focales parmi la pluralité de dispositifs du kit selon l'abaque de correspondance du kit en fonction du nombre et de la largeur des voies routières à surveiller par l'automate, la position et la distance à ligne d'infraction dudit dispositif d'acquisition ;
- arranger le ou les objectifs optiques sélectionnés sur les positions sélectionnables du kit selon l'abaque de correspondance du kit.

10. Utilisation d'un kit d'installation d'un dispositif d'acquisition d'images selon l'une quelconque des revendications 1 à 8 dans un automate de contrôle routier.
